Europäisches Patentamt

European Patent Office

Office européen des brevets

(11) Numéro de publication: **0 099 311**
A1

## (12) DEMANDE DE BREVET EUROPEEN

(21) Numéro de dépôt: 83420115.4

(22) Date de dépôt: 06.07.83

(51) Int. Cl.³: **B 62 D 3/12**
F 16 H 55/26

(30) Priorité: 09.07.82 FR 8212073

(43) Date de publication de la demande:
25.01.84 Bulletin 84/4

(84) Etats contractants désignés:
BE DE FR GB IT LU NL

(71) Demandeur: VALLOUREC Société Anonyme dite.
7, place du Chancelier Adenauer
F-75116 Paris(FR)

(72) Inventeur: Cuvillier, Gabriel
54 Boulevard de Valmy
F-92700 Colombes(FR)

(74) Mandataire: de Passemar, Bernard et al,
VALLOUREC 7 Place du Chancelier Adenauer
F-75016 Paris(FR)

(54) Crémaillère de direction pour véhicules automobiles et procédé de fabrication d'une telle crémaillère.

(57) L'invention concerne les ébauches de crémaillères de direction de véhicules automobiles et les crémaillères obtenues à partir de ces ébauches réalisées sous forme d'une pièce tubulaire unitaire dont l'épaisseur n'est pas constante par opérations successives à froid de rétreint à creux et d'étirage sur mandrin à partir d'un tube ébauche.

Elle concerne plus particulièrement les ébauches de crémaillères dont la partie (2) apte à la réalisation de la denture est reliée à au moins une extrémité (5) par une zone (4) dont l'épaisseur est inférieure à ladite partie (2) apte à la réalisation de la denture.

Fig.1

CREMAILLERE DE DIRECTION POUR VEHICULES AUTOMOBILES
ET PROCEDE DE FABRICATION D'UNE TELLE CREMAILLERE

L'invention concerne les crémaillères de direction pour véhicules automobiles et est plus particulièrement relative à un nouveau type d'ébauches de crémaillères permettant de réaliser lesdites crémaillères sous forme tubulaire ainsi qu'au procédé de fabrication permettant de réaliser de telles pièces.

Les crémaillères de direction pour véhicules automobiles sont, de façon générale, constituées par une barre en acier approprié dans une partie adéquate de laquelle, située au milieu ou décalée par rapport au milieu de la longueur de ladite barre, est aménagée une denture formant crémaillère proprement dite, les deux extrémités étant usinées pour constituer des embouts d'assemblage à d'autres pièces de commande de la direction.

Il s'agit donc d'un organe massif, relativement lourd, dont les constructeurs d'automobiles désireraient voir diminuer le poids, comme celui de tous les autres organes constitutifs du véhicule, en vue d'obtenir des économies d'énergie lors de leur utilisation.

La Demanderesse aurait pu être tentée de réaliser une telle crémaillère sous forme tubulaire, en partant d'un tube en acier de diamètre et d'épaisseur adéquates, et en le soumettant à des opérations successives de rétreint et d'étirage à froid permettant d'obtenir une pièce tubulaire finie, dont les extrémités peuvent éventuellement avoir un diamètre intérieur inférieur à celui de sa partie centrale, et dont une partie appropriée a une plus grande épaisseur, suffisante pour qu'on puisse y tailler transversalement une crémaillère.

C'est en effet une technique que connaît bien la Demanderesse, qu'elle a su maîtriser, et qui fait l'objet de demandes de brevets antérieurs FR 2 369031, FR 2 369027 et FR 2 473 916.

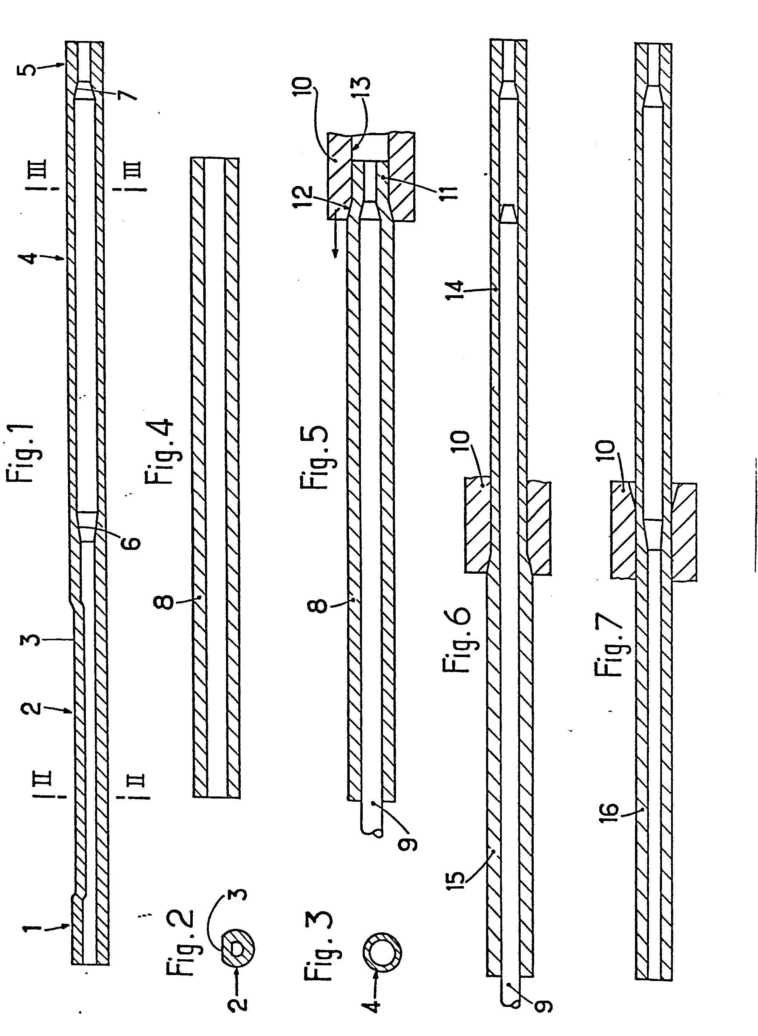

Elle y avait cependant renoncé en raison notamment de la réticence des constructeurs à la réalisation sous forme tubulaire d'une crémaillère de direction pour automobiles, qui est un organe vital du véhicule, dont la fiabilité ne doit pas pouvoir être mise en doute et également

0099311

-2-

parce qu'elle craignait que l'augmentation du prix d'une telle crémaillère tubulaire par rapport à celui d'une crémaillère classique, due aux opérations successives de rétreint et d'étirage nécessaires pour l'obtenir, ne soit pas compensée par les économies que pourrait permettre sa diminution de poids. Elle y a renoncé aussi parce qu'après avoir dessiné une telle pièce tubulaire, telle que montrée à la figure 1, ayant à ses extrémités et dans sa partie destinée à constituer la crémaillère proprement dite une épaisseur suffisante pour permettre les usinages nécessaires à cet effet, et pour le surplus une épaisseur juste suffisante pour qu'elle ait la résistance fonctionnelle adéquate, il s'est avéré impossible de réaliser ladite pièce par les méthodes de rétreint et d'étirage à froid classiques, l'outillage ne résistant pas aux efforts trop importants auxquels il devrait être soumis à cet effet, eu égard aux fortes différences d'épaisseurs de ces différentes parties et à la grande longueur relative de la partie de moindre épaisseur.

C'est la raison pour laquelle, s'orientant dans une autre direction, elle a conçu et protégé par une demande de brevet FR 2 513203 une crémaillère de direction pour véhicules automobiles dont la partie formant crémaillère proprement dite qui est constituée d'une barre pleine, au lieu d'être venue d'une pièce avec les embouts, est reliée à au moins l'un d'eux par un tube dont les extrémités sont soudées en bout et serties, d'un côté à l'extrémité correspondante de la partie formant crémaillère proprement dite, et de l'autre côté au dit embout.

Un allègement substantiel de la crémaillère de direction a pu être ainsi réalisé.

Malgré les préjugés des constructeurs et les siens, la demanderesse a cherché à modifier le procédé classique d'obtention de pièces tubulaires, comportant des épaisseurs différentes, par des opérations successives de rétreint et d'étirage à froid de façon à pouvoir réaliser industriellement une crémaillère tubulaire répondant aux conditions de fiabilité exigées par les utilisateurs.

La présente invention a pour but la fabrication de crémaillères de direction par un tel procédé.

-3-

Elle a également pour but un procédé de fabrication d'ébauches desdites crémaillères dans lequel les contraintes subies par les outillages de fabrication sont notablement réduites de façon à ce que ceux-ci travaillent sans usure excessive.

Un autre but de la présente invention est une nouvelle conception d'ébauches de crémaillères de direction allégées et les crémaillères allégées obtenues à partir de ces ébauches.

L'ébauche de crémaillère de direction pour véhicule automobile selon l'invention est constituée par une pièce tubulaire unitaire comprenant une partie apte à la réalisation de la denture de la crémaillère proprement dite reliée aux deux extrémités de ladite ébauche, la pièce tubulaire dans sa partie reliant la partie apte à la réalisation de la denture à au moins une extrémité étant d'épaisseur moindre que l'épaisseur de la partie apte à la réalisation de la denture.

Ainsi selon l'invention l'ébauche de crémaillère de direction ne comporte aucune partie rapportée par un moyen quelconque et est constituée d'une pièce tubulaire monobloc.

Selon les cas, c'est une des extrémités seulement ou les deux extrémités de l'ébauche de crémaillère qui seront reliées à la partie apte à la réalisation de la denture par une partie tubulaire dont l'épaisseur est inférieure à l'épaisseur de la partie apte à la réalisation de la denture.

Avantageusement les deux parties tubulaires d'extrémités seront constituées par des parties dont l'épaisseur sera supérieure à celle de la partie ou des parties reliant la partie apte à la réalisation de la denture à une ou aux deux extrémités.

Préférentiellement la pièce tubulaire constituant l'ébauche de crémaillère de direction sera de section circulaire, le diamètre extérieur étant constant sur toute la longueur, à l'exception éventuellement du diamètre des parties d'extrémités qui pourra, selon les cas, être inférieur ou supérieur au diamètre de la partie centrale.

-4-

La partie apte à la réalisation de la denture de la crémaillère proprement dite peut suivant le type de denture adoptée être déformée avec ou sans enlèvement de matière de façon à comporter une face sensiblement plane parallèle à l'axe de la pièce.

L'invention a également pour objet la crémaillère de direction obtenue en utilisant une ébauche telle que décrite ci-dessus, la crémaillère étant obtenue en faisant subir à l'ébauche des opérations de finition usuelles par exemple au niveau de la confection de la denture qui peut être réalisée par enlèvement de matière ou sans enlèvement de matière et au niveau de la préparation des extrémités.

Le procédé de fabrication de l'ébauche de crémaillère de direction qui vient d'être décrite consiste, selon l'invention, à soumettre un tronçon de tube initial de longueur, de section et d'épaisseur appropriées, à une succession de déformations à froid comportant des opérations, réalisées sur tout ou partie de la longueur du tube en cours de fabrication, du type rétreint à creux et étirage sur mandrin au moyen d'au moins une filière, dans lequel les opérations d'étirage sont réalisées au moyen de mandrins de diamètres légèrement inférieurs aux diamètres intérieurs concernés du tube en cours de fabrication sur lesquels est enfilée la partie à étirer dudit tube, lequel est présenté devant la filière correspondante la filière et le mandrin étant déplacés, respectivement l'un par rapport à l'autre, d'un mouvement axial en sens contraire.

Selon les cas la déformation totale est obtenue par une ou plusieurs opérations d'étirage sur mandrin, le nombre des filières utilisées étant déterminé par l'importance des déformations à réaliser et la capacité de déformation du matériau du tube.

Avantageusement la première opération d'étirage sur mandrin sera précédée par une opération de rétreint à creux portant sur une extrémité du tube initial, la même filière pouvant éventuellement être utilisée pour ces deux opérations.

Les opérations de rétreint à creux à travers les filières sont réalisées de façon en soi connue, le tube étant déplacé par rapport à la filière ou vice-versa et la filière comportant un cône d'introduction précédant

-5-

le profil de travail de la filière dans lequel se réalise le rétreint que l'on veut obtenir.

Le profil des mandrins qui peut être variable ou constant détermine les différentes épaisseurs dans les différentes parties de la pièce à fabriquer et le profil des zones de raccordement de ces parties entre elles.

La gamme de déformation selon le procédé dans le cas d'une ébauche de crémaillère de direction de section circulaire à diamètre extérieur constant peut être réalisée par les opérations successives suivantes :

rétreint à creux sur une extrémité, au moins une passe d'étirage sur mandrin sur une partie de la longueur du tube initial, rétreint à creux final sur toute la longueur du tube.

L'invention sera maintenant exposée à l'aide d'un exemple de réalisation.

La figure 1 est une vue en coupe axiale d'une ébauche de crémaillère de direction selon l'invention dans le cas d'une pièce ayant une seule partie amincie.

Les figures 2 et 3 sont des vues en coupes transversales faites respectivement suivant les lignes II-II et III-III de la figure 1.

La figure 4 montre en coupe longitudinale le tube initial en acier à partir duquel est fabriquée l'ébauche de crémaillère avant le début de la première opération de façonnage.

Les figures 5 et 6 montrent sur mandrin d'étirage le tube de la figure 4 après une première opération de rétreint, et une seconde opération d'étirage, respectivement.

Le figure 7 montre ce même tube après une dernière opération de rétreint.

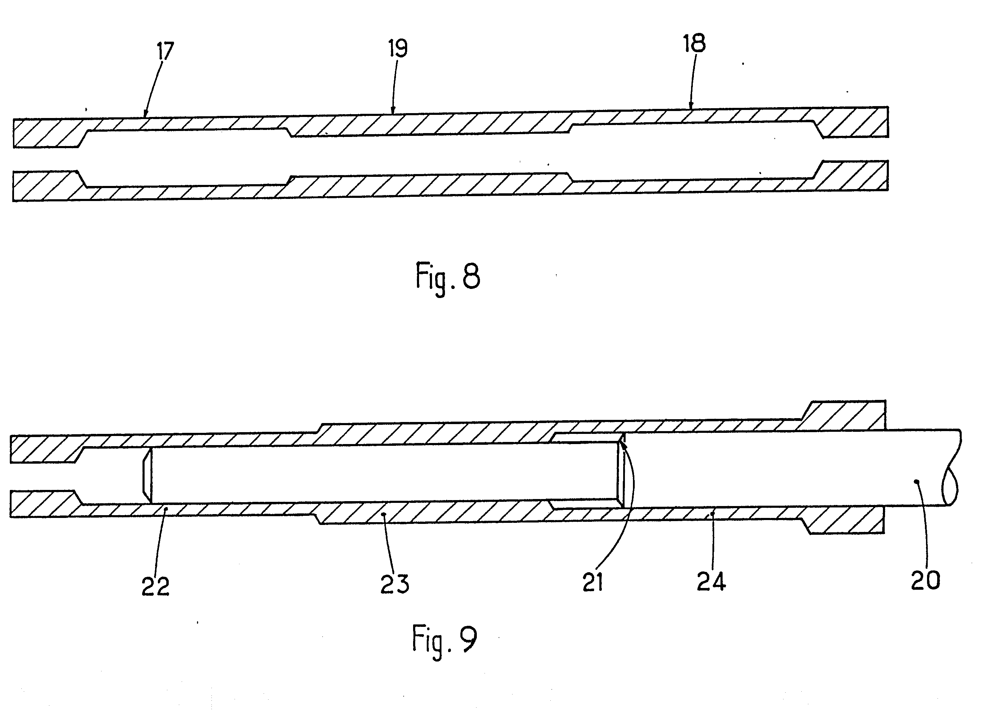

La figure 8 est une vue en coupe axiale d'une ébauche de crémaillère de direction selon l'invention dans le cas d'une variante comportant deux parties amincies.

La figure 9 montre, sur mandrin d'étirage, avant le rétreint à creux final, un tube capable de l'ébauche de la figure 8, en cours de fabrication.

L'ébauche de crémaillère tubulaire à section circulaire et diamètre extérieur constant représentée à la figure 1 est constituée d'une pièce unitaire et comporte, de la gauche à la droite, une partie (1) de forte épaisseur qui, après usinage, constituera un de ses embouts d'extrémité, une partie (2), de même diamètre extérieur et de même épaisseur, dont un côté (3) a été écrasé parallèlement à l'axe du tube pour permettre d'y tailler transversalement la denture d'une crémaillère, comme le montre plus spécialement la figure 2, une partie (4), de même diamètre extérieur mais de moindre épaisseur que la partie (2), comme le montre la figure 3, et une partie (5), semblable à la partie (1), qui, après usinage, constituera l'autre embout d'extrémité.

La surface intérieure de la partie (4) de moindre épaisseur est raccordée aux surfaces intérieures des parties (2) et (5) de plus grande épaisseur qui l'entourent par des conicités (6) et (7).

On peut par exemple réaliser une ébauche de crémaillère tubulaire, comme celle représentée, ayant une longueur de 570 mm, de 24 à 25 mm de diamètre extérieur, une épaisseur de 7 à 8 mm pour les parties épaisses (1, 2, 5), et de 4 à 5 mm pour les parties minces (4), ces dimensions pouvant évidemment varier suivant le poids du véhicule et l'effort plus ou moins important à transmettre aux roues directrices pour leurs changements d'orientation. Pour fabriquer une telle ébauche de crémaillère de direction on peut partir d'un tube initial d'acier (8) représenté à la figure 4, ayant 360 mm de longueur et de 7 à 8 mm d'épaisseur que l'on soumet à des opérations successives de rétreint à creux et d'étirage sur mandrin à froid, suivi d'un écrasement selon un plan parallèle à l'axe de sa partie de plus grande épaisseur (2).

Un taillage transversal de la denture dans cette zone aplatie (3) pour constituer la crémaillère proprement dite et un usinage des deux extrémités pour constituer les embouts permettent d'obtenir une crémaillère

0099311

-7-

de direction finie.

Les opérations successives de façonnage peuvent être les suivantes.

Le tube (8) est enfilé sur la majeure partie de sa longueur, l'extrémité restant libre, sur un mandrin (9) à profil constant de diamètre légèrement inférieur au diamètre intérieur du tube (8), et on pousse en direction du mandrin la filière (10) qui provoque le rétreint à creux désiré de l'extrémité(11)du tube(8) comme montré à la figure 5.

La filière (10) comporte un cône d'introduction (12) précédant le profil de travail (13) qui confère à la pièce la dimension recherchée.

Ce premier rétreint compte tenu de son importance constitue l'accrochage pour l'opération d'étirage.

Si l'on continue à exercer une poussée dans le même sens sur la filière (10), elle provoque un étirage du tube le long du mandrin (9), mais, simultanément, une partie du métal flue à travers la filière, et le tube s'étire donc de part et d'autre de la filière (10).

On arrête cette opération d'étirage sur mandrin (9) quand la longueur de la partie étirée (14) du tube (8) correspond à la longueur de la partie de moindre épaisseur (4) de l'ébauche de crémaillère à réaliser.

On extrait alors le mandrin (9) du tube et on rétreint à creux sa partie (15), de plus grande épaisseur, en faisant passer sur elle, en sens inverse, la même filière (10); cette partie (16) ainsi rétreinte, a le même diamètre extérieur que le reste du tube, et la même épaisseur que son autre extrémité. On peut également, si l'on veut, utiliser pour faire ce rétreint à creux une filière dont la dimension du profil de travail (13) est légèrement inférieure à celle de la filière déjà mise en oeuvre (10).

Pour terminer la préparation de l'ébauche de crémaillère il n'y a plus qu'à écraser partiellement parallèlement à l'axe la partie dans laquelle sera taillée la crémaillère proprement dite.

Le cas où l'ébauche de crémaillère de direction à fabriquer comporte une partie amincie (17-18) de chaque côté de la partie (19) apte à la réalisation de la denture est représenté figures 8 et 9. Dans ce cas on utilise un mandrin (20) ayant un profil cylindrique avec un étage (21).

Avec une première filière on effectue d'abord un rétreint à creux d'extrémité suivi d'un étirage sur mandrin réalisé sur une partie de la longueur de l'étage du mandrin à plus faible section de façon à obtenir ainsi une première partie amincie (22). On fait ensuite une deuxième opération d'étirage sur le même mandrin avec une deuxième filière dont le profil de travail a une section supérieure au profil de travail de la première filière. Cette phase d'étirage est réalisée d'abord sur la partie restante de la longueur de l'étage du mandrin à plus faible section puis poursuivie sur une partie de la longueur de l'étage du mandrin à plus forte section.

On obtient ainsi pour la longueur du tube étirée sur l'étage du mandrin à plus faible section la partie de l'ébauche épaissie (23) et correspondant à la partie (19) apte à la réalisation de la denture de la crémaillère et pour la longueur du tube étirée sur l'étage du mandrin à plus forte section une deuxième partie amincie (24). On règle les épaisseurs et longueurs des parties (22) (23) (24) comme on le désire.

Une fois le deuxième étirage achevé, on extrait le mandrin du tube et on fait un rétreint à creux sur toute la longueur à l'aide de la première filière ou d'une filière de dimensions très voisines de manière à avoir un diamètre extérieur constant. On obtient ainsi le profil recherché pour l'ébauche de la figure 8 qui est à diamètre extérieur constant.

Pour faciliter la lecture des figures, on n'a pas représenté les filières sur la figure 9.

Il est bien entendu que les modes de réalisation de l'invention qui ont été décrits ci-dessus en référence aux figures annexées sont donnés à titre d'exemples non limitatifs et que de nombreuses modifications peuvent être apportées sans qu'on s'écarte pour cela du cadre de la présente invention ; c'est ainsi, notamment, que l'emplacement et les dimensions de la partie formant crémaillère peuvent être différents suivant le modèle du véhicule à équiper.

REVENDICATIONS

1) Ebauche de crémaillère de direction pour véhicules automobiles constituée par une pièce unitaire comprenant une partie (2) apte à la réalisation de la denture de la crémaillère proprement dite reliée aux deux extrémités (1) (5) de ladite ébauche, caractérisée en ce que la pièce est tubulaire et est dans sa partie (4) reliant la partie (2) apte à la réalisation de la denture à au moins une extrémité (5) d'épaisseur moindre que l'épaisseur de la partie apte (2) à la réalisation de la denture.

2) Ebauche de crémaillère selon la revendication 1, caractérisée en ce que les deux extrémités sont reliées à la partie (19) apte à la réalisation de la denture par deux parties (17-18) dont les épaisseurs sont inférieures à l'épaisseur de la partie (19) apte à la réalisation de la denture.

3) Ebauche de crémaillère selon la revendication 1 ou 2, caractérisée en ce que sa section est circulaire, le diamètre extérieur étant constant sur toute la longueur.

4) Ebauche de crémaillère selon la revendication 1 ou 2, caractérisée en ce que sa section est circulaire, le diamètre étant constant sur toute la longueur sauf aux extrémités (1-5) de la pièce où il a une valeur différente.

5) Ebauche de crémaillère selon l'une quelconque des revendications 1 à 4, caractérisée en ce que la partie (2) apte à la réalisation de la denture est déformée avec ou sans enlèvement de matière de façon à comporter une face (3) sensiblement plane parallèle à l'axe de la pièce.

6) Ebauche de crémaillère selon l'une quelconque des revendications 1 à 5, caractérisée en ce que les parties tubulaires d'extrémités (1-5) sont d'épaisseur supérieure à l'épaisseur des parties (4-17-18) reliant la partie (2) apte à la réalisation de la denture aux extrémités (1-5).

7) Ebauche de crémaillère selon l'une quelconque des revendications 1 à 6, caractérisée en ce que cette ébauche a un diamètre extérieur de 24 à 25 mm environ, une épaisseur de 4 à 5 mm environ dans sa partie (4) de plus faible épaisseur reliant sa partie (2) apte à la réalisation de la denture à l'extrémité (5) correspondante et une épaisseur de 7 à 8 mm environ dans sa partie (2) apte à la réalisation de la denture.

8) Crémaillère de direction pour véhicules automobiles obtenue en utilisant une ébauche selon l'une quelconque des revendications 1 à 7.

9) Procédé pour la fabrication d'une ébauche de crémaillère de direction pour véhicules automobiles constituée par une pièce tubulaire unitaire comprenant une partie apte (2) à la réalisation de la denture de la crémaillère proprement dite reliée aux deux extrémités (1) (5) de ladite ébauche, la pièce tubulaire dans sa partie reliant la partie (2) apte à la réalisation de la denture à au moins une extrémité (5) étant d'épaisseur moindre que l'épaisseur des parties aptes à la réalisation de la denture selon lequel on soumet un tronçon de tube initial de longueur, de section et d'épaisseur appropriées à une succession de déformations à froid comportant des opérations, réalisées sur tout ou partie de la longueur du tube en cours de fabrication, du type rétreint à creux et étirage sur mandrin au moyen d'au moins une filière, caractérisé en ce que les opérations d'étirage sont réalisées au moyen de mandrins de diamètres légèrement inférieurs aux diamètres intérieurs concernés du tube en cours de fabrication sur lesquels est enfilée la partie à étirer dudit tube, lequel est présenté devant la filière correspondante, la filière et le mandrin étant déplacés, respectivement l'un par rapport à l'autre, d'un mouvement axial en sens contraire.

10) Procédé selon la revendication 9, caractérisé en ce que l'étirage sur mandrin est précédé d'une opération de rétreint à creux portant sur une extrémité du tube initial la même filière étant utilisée pour ces deux opérations.

11) Procédé selon la revendication 9 ou 10, caractérisé en ce que dans le cas d'une crémaillère de direction de section circulaire à diamètre extérieur constant la fabrication comporte les étapes successives de rétreint à creux sur une extrémité, d'au moins une passe d'étirage sur mandrin sur une partie de la longueur du tube initial et rétreint à creux final sur toute la longueur du tube.

12) Procédé selon la revendication 11, caractérisé en ce que lorsque la crémaillère comporte une partie amincie de chaque côté de la partie apte à la réalisation de la denture on utilise un mandrin ayant un profil avec un étage.

Fig.1

Fig.2

Fig.3

Fig.4

Fig.5

Fig.6

Fig.7

1/2

0099311

Fig. 8

Fig. 9

0099311

**0099311**

Office européen
des brevets

**RAPPORT DE RECHERCHE EUROPEENNE**

Numéro de la demande

EP 83 42 0115

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | PRODUCT ENGINEERING, Product Design Handbook for Issue 1956, vol. 26, no. 11, octobre 1955, pages E8,E9, F. ROGERS: "Racks for enclosed spindles and sleeves" * Figure 5 et texte sous la figure *  --- | 1 | B 62 D 3/12<br>F 16 H 55/26 |
| A | GB-A-2 061 138 (CAM GEARS) * En entier *  --- | 1 | |
| A | FR-A-1 390 659 (ZWEIRAD UNION) * En entier *  --- | 1 | |
| A | US-A-4 133 221 (CLARY) * En entier *  --- | 1 | |
| A | DE-A-1 655 932 (Z.F.) * En entier *  --- | 1 | **DOMAINES TECHNIQUES RECHERCHES (Int. Cl. ³)** |
| A | FR-A-2 199 308 (ALFA ROMEO)  --- | | B 62 D<br>F 16 H |
| D,A | FR-A-2 513 203 (COMPAGNIE INDUSTRIELLE ET COMMERCIALE DE TUBES)  --- | | |
| D,A | FR-A-2 369 031 (COMPAGNIE INDUSTRIELLE ET COMMERCIALE DE TUBES)  --- -/- | | |

Le présent rapport de recherche a été établi pour toutes les revendications

| Lieu de la recherche | Date d'achèvement de la recherche | Examinateur |
|---|---|---|
| LA HAYE | 24-10-1983 | PIRIOU J.C. |

Office européen
des brevets

**RAPPORT DE RECHERCHE EUROPEENNE**

Numéro de la demande

EP  83  42  0115

| | **DOCUMENTS CONSIDERES COMME PERTINENTS** | | Page    2 |
|---|---|---|---|
| Catégorie | Citation du document avec indication. en cas de besoin, des parties pertinentes | Revendication concernée | CLASSEMENT DE LA DEMANDE (Int. Cl. ³) |
| D,A | FR-A-2 369 027   (COMPAGNIE INDUSTRIELLE ET COMMERCIALE DE TUBES)  --- | | |
| D,A | FR-A-2 473 916   (COMPAGNIE INDUSTRIELLE ET COMMERCIALE DE TUBES)  ----- | | |
| | | | DOMAINES TECHNIQUES RECHERCHES (Int. Cl. ³) |
| | Le présent rapport de recherche a été établi pour toutes les revendications | | |

| Lieu de la recherche LA HAYE | Date d'achèvement de la recherche 24-10-1983 | Examinateur PIRIOU J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503 03 82